# EUROPÄISCHE PATENTSCHRIFT

(11) **EP 0 876 298 B1**
(45) Veröffentlichungstag und Bekanntmachung des Hinweises auf die Patenterteilung: **20.06.2001**
(21) Anmeldenummer: 96940974.7
(22) Anmeldetag: 17.12.1996
(51) Int. Cl.: C02F 1/28

(54) **VERFAHREN ZUR AUFBEREITUNG VON SPÜLWASSER AUS DER HALBLEITERFERTIGUNG**
PROCESS FOR PURIFYING RINSING WATER USED IN SEMICONDUCTOR MANUFACTURE
PROCEDE DE TRAITEMENT DE L'EAU DE RIN AGE ISSUE DE LA FABRICATION DE SEMI-CONDUCTEURS

(30) Priorität: 04.01.1996 CH 1096
(43) Veröffentlichungstag der Anmeldung: 11.11.1998
(73) Patentinhaber: Christ AG, CH-4147 Aesch (CH)
(72) Erfinder: RYCHEN, Philippe, F-68640 Muespach-le-Haut (FR); KLEIBER, Thomas, CH-4106 Therwil (CH); GENSBITTEL, Dominique, F-68330 Huningue (FR)
(74) Vertreter: Zimmermann, Hans, Dr.
(86) Internationale Anmeldenummer: CH9600442
(87) Internationale Veröffentlichungsnummer: WO9725278

(56) Entgegenhaltungen:
- US-A- 4 839 331

## Beschreibung

Die Erfindung betrifft ein Verfahren zur Entfernung von hydrophilen organischen Verunreinigungen aus Spülwässern der Halbleiterfertigung mittels Adsorption.

Bei der Herstellung integrierter Schaltungen (Chips) müssen die Wafers nach gewissen Arbeitsgängen, unter anderem nach dem Ätzen, mit verschiedenen Chemikalien und mit hochreinem Wasser gespült werden. Das in grossen Mengen anfallende Spülwasser (Reclaim) weist infolge des Gehalts an organischen und anorganischen Stoffen eine Qualität auf, die eine direkte Rückführung in den Reinstwasserherstellungskreislauf verunmöglicht. Andererseits wird eine Rezyklierung des Spülwassers durch die aus der Halbleiterfertigung stammenden organischen Verunreinigungen beträchtlich erschwert, da im Reinstwasserkreislauf TOC-Werte (Totalgehalt an organischem Kohlenstoff) von weniger als 5 ppb erreicht werden müssen und diese organischen Verunreinigungen mit herkömmlichen Methoden wie Umkehrosmose, Mischbettfilter, Entgasung, UV-Bestrahlung und Ultrafiltration in der Regel nur ungenügend entfernt werden können.

Typische Halbleiterspülwässer enthalten anorganische und organische Stoffe, wie beispielsweise Fluorid-, Chlorid-, Nitrat-, Sulfat-, Phosphat- und Ammonium-Ionen, Wasserstoffperoxid, Isopropanol, Aceton, N-Methylpyrrolidon, Tetramethylammoniumhydroxid, Methanol, Ethanol, Butanol, Essigsäure, Dimethylsulfoxid, Propylenglykolmethyletheracetat und dergleichen. Die Hauptbestandteile bestehen meist aus Isopropanol, Aceton, N-Methylpyrrolidon, Flussäure, Salzsäure, Schwefelsäure, Phosphorsäure, Wasserstoffperoxid, Ammoniak, Ammoniumfluorid, Tetramethylammoniumhydroxid und dergleichen. Die Spülwässer können typischerweise eine elektrische Leitfähigkeit von etwa 10 bis 2000 µS/cm und einen TOC-Wert von etwa 0,1 bis 20 ppm aufweisen. Der pH-Wert liegt im allgemeinen zwischen etwa 2 und 9, meistens unterhalb 7.

Aus Kosten- und Umweltschutzgründen sowie aus Gründen der Wasserknappheit ist es wünschenswert, diese Spülwässer, deren Gesamtgehalt an Verunreinigungen in der Regel deutlich unter dem von gewöhnlichem Leitungswasser liegt, soweit aufzubereiten, dass sie erneut in der Halbleiterfertigung eingesetzt werden können.

Zur Aufarbeitung der Spülwässer werden heute Ionenaustauschverfahren, Umkehrosmoseverfahren, Adsorption an Aktivkohle, biologische Verfahren und Ultrafiltration eingesetzt. Beispielsweise werden freie Mineralsäuren und organische Säuren routinemässig über schwach bzw. stark basische Anionenaustauscherharze entfernt. Ferner sind Umkehrosmoseanlagen, die zum Teil schon in der Zusatzwasseraufbereitung der Reinstwasseranlagen vorhanden sind, zusammen mit den vorhandenen Ionenaustauscherstufen in der Regel ohne weiteres in der Lage, sowohl anorganische als auch organische Säuren, Basen und Salze in ausreichendem Masse zu entfernen. Wasserstoffperoxid und hydrophile organische Verbindungen wie Isopropanol, Aceton, N-Methylpyrrolidon, Methanol, Ethanol, Butanol, Dimethylsulfoxid und dergleichen werden hingegen auch in Umkehrosmosestufen meist nur zu etwa 50-70% abgetrennt, was im Hinblick auf die verlangten TOC-Werte von weniger als 5 ppb bei weitem nicht ausreicht. Durch zusätzliche Behandlung mit Aktivkohle können die Konzentrationen dieser Verbindungen grundsätzlich weiter verringert werden; eine befriedigende Abtrennung ist aber auch auf diese Weise oft nicht oder nur sehr schwer zu erreichen.

Die bekannten Verfahren haben somit den Nachteil, dass mehrere Reinigungsmethoden kombiniert werden müssen und dennoch, insbesondere im Falle von vergleichsweise hohen Konzentrationen an organischen Verunreinigungen, oft keine zufriedenstellenden Ergebnisse erhalten werden können und/oder Biofouling die einer biologischen Stufe oder einem Aktivkohlefilter nachgeschalteten Stufen beeinträchtigen kann.

Andererseits sind z.B. aus US-A-4040990, JP-A-62/197308, US-A-4839331, EP-A-0604110 und EP-A-0623557 durch Pyrolyse synthetischer Polymere erhaltene, kohleartige Adsorbentien bekannt, die eine im Vergleich zu Aktivkohle hydrophobere Oberfläche aufweisen und daher hydrophobe organische Verbindungen, insbesondere Kohlenwasserstoffe und halogenierte Kohlenwasserstoffe, besser zu adsorbieren vermögen als Aktivkohle. Entsprechende Produkte sind z.B. unter dem Markennamen Ambersorb (Rohm and Haas, Philadelphia, USA) in Handel erhältlich.

In EP-A-0285321 wurde ferner vorgeschlagen, Pyrolysate vernetzter Polymere als Adsorbentien zur Abtrennung bakterieller Endotoxine (Lipopolysaccharide) zu verwenden, die als Pyrogene in Leitungswasser oder in gereinigtem Wasser z.B. infolge Lagerung vorhanden sein können. Als vernetzte Polymere eignen sich beispielsweise Styrol-Divinylbenzol-Copolymere, die notfalls sulfoniert oder chlormethyliert und dann zu einem Ionenaustauscherharz aminiert sein können. Wie in EP-A-285321 weiter offenbart wird, kann diese Methode auch in Wasseraufbereitungsverfahren eingesetzt werden, in welchen hochreines Wasser hergestellt und gespeichert wird, indem das gespeicherte Wasser vor einem anschliessenden Filtrationsschritt mit dem Pyrolysat in Kontakt gebracht wird. Hierbei wird jedoch zur Reinstwasserherstellung von Leitungswasser ausgegangen und der Adsorptionsschritt dient lediglich zur Abtrennung allenfalls vorhandener Pyrogene aus dem gespeicherten hochreinen Wasser.

Überraschenderweise wurde nun gefunden, dass Pyrolysate makroretikulärer sulfonierter vinylaromatischer Polymere die in Spülwässern der Halbleiterfertigung vorhandenen hydrophilen organischen Verunreinigungen und Wasserstoffperoxid trotz ihrer hydrophoberen Oberfläche deutlich besser zu adsorbieren vermögen als Aktivkohle. Zudem wurde gefunden, dass an die genannten Pyrolysate adsorbierte Verunreinigungen wesentlich besser desorbierbar sind als an Aktivkohle adsorbierte.

Die Erfindung betrifft daher ein Adsorptionsverfahren zur Entfernung von hydrophilen organischen Verunreinigungen, die mit Wasser bei 15°C in Mengen von mindestens 10 Gew.-% mischbar sind, und/oder von Wasserstoffperoxid aus Spülwässern der Halbleiterfertigung, welches dadurch gekennzeichnet ist, dass man das Spülwasser durch ein Bett eines Pyrolysates eines makroretikulären sulfonierten vinylaromatischen Polymers mit einem Kohlenstoffgehalt von mindestens 85 Gew.-% und einem Kohlenstoff/Wasserstoff-Atomverhältnis von 1,5:1 bis 20:1 leitet.

Es hat sich gezeigt, dass mit dem erfindungsgemässen Verfahren nicht nur wesentlich bessere Entfernungsraten erzielt werden, sondern meist auch die Adsorptionskapazität des Pyrolysates signifikant höher ist als diejenige einer üblichen Aktivkohle. Bereits mit einer einzelnen Adsorptionsstufe mit z.B. einer Säulenhöhe (Schichthöhe des Bettes) von 60 cm werden in der Regel Entfernungsraten von weit über 90% erzielt, was insbesondere auch deshalb überrascht, als eine gute Adsorptionsfähigkeit hydrophober Pyrolysate für hydrophile Verbindungen nicht zu erwarten war und die Verunreinigungen in den Spülwässern nur in Mengen von wenigen ppm vorliegen. Mit dem erfindungsgemässen Verfahren lassen sich somit, notfalls durch Hintereinanderschaltung zweier oder mehrerer Adsorptionsstufen und/oder vorzugsweise durch Kombination mit den bereits vorhandenen Frischwasseraufbereitungsverfahren, ohne weiteres die verlangten TOC-Werte von weniger als 5 ppb erreichen. Zudem haben die erfindungsgemäss verwendbaren Pyrolysate im Unterschied zu Aktivekohle, die meist nicht regeneriert wird, den Vorteil, dass sie leicht regeneriert werden können.

Der Ausdruck "hydrophile organische Verunreinigung" bezeichnet im Rahmen der vorliegenden Erfindung nicht-ionische organische Verbindungen, die in Spülwässern der Halbleiterfertigung vorhanden sein können und mit Wasser bei 15°C in Mengen von mindestens 10 Gew.-% mischbar sind, insbesondere bei 20°C flüssige nicht-ionische organische Verbindungen wie die in der der Halbleiterfertigung verwendeten Lösungsmittel Isopropanol, Aceton, N-Methylpyrrolidon, Methanol, Ethanol, Butanol, Essigsäure, Dimethylsulfoxid und Propylenglykoletheracetat, insbesondere Isopropanol, Aceton und N-Methylpyrrolidon.

Der Ausdruck "vinylaromatisches Polymer" bezeichnet im Rahmen der vorliegenden Erfindung durch Polymerisation eines vinylaromatischen Monomers erhaltene Polymere.

Der Ausdruck "makroretikulär" ist im Rahmen der vorliegenden Erfindung so zu verstehen, dass die betreffenden Polymere in hohem Masse Poren mit einem Porenradius von mindestens 25 nm aufweisen.

Die erfindungsgemäss verwendbaren Pyrolysate weisen zweckmässigerweise einen Kohlenstoffgehalt von mindestens 85 Gew.-% und ein Kohlenstoff/Wasserstoff-Atomverhältnis von 1,5:1 bis 20:1, vorzugsweise 2:1 bis 10:1, auf. Sie können in bekannter Weise, z.B. nach den in US-A-4040990, US-A-4839331 und JP-A-62/197308 beschriebenen Methoden, durch kontrollierten thermischen Abbau aus makroretikulären sulfonierten vinylaromatischen Polymeren hergestellt werden.

Als Ausgangspolymere eignen sich sowohl Homopolymere als auch Copolymere von monoethylenisch ungesättigten Monomeren, wie Styrol, Vinyltoluol, Ethylvinylbenzol, Vinylxylol und Vinylpyridin, und polyethylenisch ungesättigten Monomeren, wie Divinylbenzol, Trivinylbenzol, Divinyltoluol und Divinylpyridin. Im allgemeinen sind jedoch Copolymere aus einem monoethylenisch und einem polyethylenisch ungesättigen Polymer bevorzugt. Besonders bevorzugt sind Styrol-Divinylbenzol-Copolymere, insbesondere solche, die durch Polymersation von 75-90 Gewichtsteilen Styrol mit 25-10 Gewichtsteilen Divinylbenzol erhalten wurden.

Die Polymerisation kann nach bekannten Methoden, beispielsweise wie in US-A-4040990 und US-A-4839331 beschrieben, erfolgen. Eine bevorzugte Methode ist die in US-A-4224415 offenbarte Suspensionspolymerisation.

Die Sulfonierung der Polymere kann ebenfalls in bekannter Weise, beispielsweise mit konzentrierter Schwefelsäure, Oleum, Schwefeltrioxid oder Chlorsulfonsäure bei erhöhter Temperatur, erfolgen. Geeignete Bedingungen sind z.B. aus US-A-2366007, US-A-2500149, US-A-4224415 und US-A-4839331 bekannt.

Die Pyrolyse der sulfonierten Polymere kann, wie z.B. aus US-A-4040990 und US-A-4839331 bekannt, durch Erhitzen der Polymere auf eine Temperatur von etwa 300-1200°C, vorzugsweise etwa 400-800°C, in inerter Gasatmosphäre (z.B. Stickstoff, Helium, Neon und/oder Argon) während etwa 0,3 bis 2 Stunden erfolgen. Gewünschtenfalls kann dem inerten Gas ein aktivierendes Gas, wie Kohlendioxid, Sauerstoff oder Wasserdampf, zugesetzt oder eine Nachbehandlung durch Erhitzen auf etwa 300-1200°C in einem aktivierenden Gas durchgeführt werden. Pyrolysate, die nicht mit einem aktivierenden Gas behandelt wurden, zeigen aber im allgemeinen ein besseres Adsorptionsvermögen für hydrophile organische Verunreinigungen.

Bei der Pyrolyse der Polymere werden zusätzlich zu den im Polymer vorhandenen Poren, die bei der Pyrolyse weitgehend erhalten bleiben, Mikroporen gebildet. Gemäss der Porengrössedefinition von IUPAC können im Pyrolysat Makroporen mit einem Porenradius vom mehr als 25 nm, Mesoporen mit einem Porenradius von 1 bis 25 nm und Mikroporen mit einem Porenradius von weniger als 1 nm unterschieden werden, wobei die Adsorption vermutlich vorwiegend in den Mikroporen stattfindet, während die Mesoporen und Makroporen den Transport zu den Mikroporen erleichtern.

Im erfindungsgemässen Adsorptionsverfahren werden vorzugsweise solche Pyrolysate verwendet, die Makroporen mit einem spezifischen Porenvolumen von mindestens etwa 0,1 ml/g, insbesondere mindestens etwa 0,13 ml/g (z.B. 0,20-0,25 ml/g), und Mesoporen mit einem spezifischen Porenvolumen von mindestens etwa 0,1 ml/g, insbesondere mindestens etwa 0,12 ml/g (z.B. 0,13-0,20 ml/g), aufweisen. Ferner werden in der Regel Pyrolysate bevorzugt, die Mikroporen mit einem spezifischen Porenvolumen von mindestens etwa 0,1 ml/g, besonders bevorzugt mindestens etwa 0,2 ml/g (z.B. 0,2-0,4 ml/g), aufweisen. Die genannten Porenvolumina entsprechen jeweils den auf einem Micromeritics-2400-Porosimeter aus den Stickstoffadsorptionsisothermen erhaltenen Werten. Die genannten Porenvolumina sind jedoch nicht kritisch, und Pyrolysate mit geringeren Porenvolumina sind grundsätzlich ebenfalls geeeignet.

Überraschenderweise wurde ferner gefunden, dass das Adsorptionsvermögen der vergleichsweise hydrophoben Pyrolysate für die in Spülwässern der Halbleiterfertigung vorhandenen hydrophilen organischen Verunreinigungen mit steigender Hydrophobizität der Pyrolysatoberfläche offenbar noch zunimmt. Pyrolysate, die bei Raumtemperatur (24°C) und einer relativen Luftfeuchtigkeit von 94% weniger als 300 mg Wasser pro g Pyrolysat zu adsorbieren vermögen, erwiesen sich nämlich im erfindungsgemässen Verfahren zur Adsorption von hydrophilen organischen Verunreinigungen als besonderes geeignet, wobei die besten Ergebnisse mit solchen Pyrolysaten erzielt wurden, die weniger als 200 mg Wasser pro g Pyrolysat zu adsorbieren vermögen. Andererseits eignen sich zur Adsorption von Wasserstoffperoxid eher die vergleichsweise weniger hydrophoben Pyrolysate, wobei gefunden wurde, dass Pyrolysate, die bei Raumtemperatur (24°C) und einer relativen Luftfeuchtigkeit von 94% mindestens 200 mg, beispielsweise 200-400 mg und vorzugsweise 200-300 mg Wasser pro g Pyrolysat zu adsorbieren vermögen, in der Regel besser geeignet sind als solche, die weniger als 200 mg Wasser pro g Pyrolysat zu adsorbieren vermögen.

Zur Entfernung von hydrophilen organischen Verunreinigungen und von Wasserstoffperoxid können daher vorzugsweise zwei Pyrolysate verwendet werden, von denen eines mindestens 200 mg Wasser und das andere weniger als 200 mg Wasser pro g Pyrolysat zu adsorbieren vermögen. Das Verfahren kann so durchgeführt werden, dass das Spülwasser entweder durch ein Bett eines Gemisches der beiden Pyrolysate oder nacheinander, in beliebiger Reihenfolge, durch je ein Bett dieser beiden Pyrolysate geleitet wird.

Die Pyrolysate sind chemisch, thermisch und physikalisch sehr stabil. Sie weisen im allgemeinen eine spezifische Oberfläche von etwa 100-2000 m²/g, meist etwa 500-1200 m²/g, auf und können beispielsweise in Form annähernd kugelförmiger Partikel mit einer mittleren Korngrösse von beispielsweise etwa 0,2 bis 1,5 mm, vorzugsweise etwa 0,3 bis 1,0 mm, verwendet werden. Geeignete Pyrolysate sind z.B. unter den Bezeichnungen Ambersorb 348F, Ambersorb 572, Ambersorb 575, Ambersorb 563 und Ambersorb 564 (Rohm and Haas, Philadelphia, USA) im Handel erhältlich, wobei alle zur Adsorption von hydrophilen organischen Verunreinigungen und von Wasserstoffperoxid geeignet sind. Vorzugsweise kann jedoch zur Adsorption von hydrophilen organischen Verunreinigungen Ambersorb 563 und/oder 564 und zur Adsorption von Wasserstoffperoxid Ambersorb 572 und/oder 575 verwendet werden.

Das erfindungsgemässe Verfahren kann nach den für Adsorptionsverfahren üblichen Methoden durchgeführt werden, wobei das Pyrolysat-Bett vorzugweise in einem Adsorptionsfilter bzw. einer Säule angeordnet ist, welche im Aufstromoder im Abstromverfahren betrieben werden kann. Im allgemeinen ist eine Betthöhe von mindestens etwa 30 cm, beispielsweise etwa 60-150 cm zu empfehlen. Um die Entfernungsrate zu verbessern, kann grundsätzlich die Betthöhe vergrössert werden; es ist jedoch in diesem Fall im allgemeinen vorteilhafter, zwei oder mehrere Pyrolysat-Bette hintereinanderzuschalten. Vorzugsweise kann dem Pyrolysat-Bett ein schwach basischer Anionenaustauscher nachgeschaltet werden.

Bei Verwendung frischer Pyrolysate empfiehlt es sich, vor der Inbetriebnahme während einigen Tagen deionisiertes Wasser durch das Pyrolysatbett zu leiten, um das Pyrolysat zu hydratisieren. Hierbei wird vorzugsweise zuerst heisses Wasser durch das Bett geleitet und die weitere Behandlung bei Raumtemperatur durchgeführt.

Wenn das Pyrolysat erschöpft ist oder die Entfernungsrate unter einen bestimmten Wert, z.B. unter 90% abfällt, kann die Zufuhr von Spülwasser unterbrochen und das Pyrolysat im Normalstrom- oder Gegenstromverfahren regeneriert und wiederverwendet werden. Die Regeneration kann vorzugsweise dadurch erfolgen, dass man Wasserdampf mit einer Temperatur von etwa 100 bis 250°C durch das Pyrolysat leitet. Im allgemeinen genügen weniger als etwa 12 Bettvolumina an Dampf (gemessen als Kondensat), um die adsorbierten Verunreinigungen weitestgehend zu entfernen.

Die Durchflussraten können beispielsweise im Betrieb etwa 5-40 Bettvolumina an Spülwasser pro Stunde und bei der Regeneration etwa 0,1-2,0 Bettvolumina an Wasserdampf (gemessen als Kondensat) pro Stunde betragen.

Um eine Unterbrechung der Spülwasseraufbereitung während der Regeneration zu vermeiden, können vorzugsweise zwei oder drei Pyrolysat-Bette vorgesehen werden, wovon jeweils eines bzw. zwei in Betrieb sind, während ein Bett regeneriert wird.

Das erfindungsgemässe Adsorptionsverfahren wird durch das folgende Beispiel weiter veranschaulicht.

### Beispiel 1

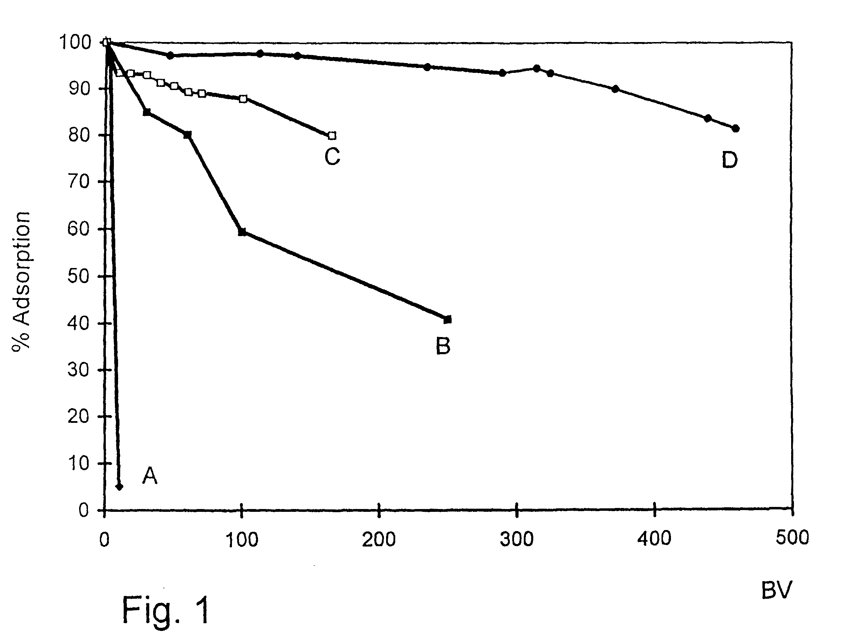

In vier Säulen aus transparentem Polyvinylchlorid mit einem Säulendurchmesser von 40 cm und einer Säulenhöhe von 1,5 m wurde bis zu einer Betthöhe von 60 cm (Bettvolumen BV = 0,75 l) je ein Adsorbens eingefüllt, nämlich zu Vergleichszwecken (A) Amberlite XAD 16 (Rohm and Haas) und (B) die Aktivkohle Carbon BD (Chemviron) und erfindungsgemäss (C) Ambersorb 572 (Rohm and Haas) und (D) Ambersorb 563 (Rohm and Haas). Die frischen Adsorbentien wurden zwecks Hydratisierung in der Säule während 7 Tagen mit deionisiertem Wasser mit einer Durchflussrate von 1 l/h durchströmt. Anschliessend wurde jeweils tagsüber bei einer Temperatur von 20-22°C Wasser enthaltend etwa 10-20 ppm Wasserstoffperoxid und einen TOC-Gehalt von 5,2-6,5 ppm, bestehend aus Aceton und Isopropanol im Gewichtsverhältnis von 1:1, mit einer Durchflussrate von 5 BV/h durch die Säulen geleitet und der TOC-Wert sowie der Gehalt an Wasserstoffperoxid im austretenden Wasser gemessen. Über Nacht wurde die Wasserzufuhr jeweils unterbrochen. Die TOC-Werte im Zulauf und die ermittelten Adsorptionskapazitäten bis zum Absinken der Entfernungsraten auf 90% sind in Tabelle 1 zusammen mit den prozentualen Entfernungsraten für Wasserstoffperoxid (Abbau an H₂O₂ in %) angegeben. Die TOC-Entfernungsraten als % Adsorption bezogen auf die TOC-Werte im Zulauf sind in Fig. 1 gegen die Bettvolumina an zugeführtem Wasser graphisch dargestellt. Wie die Ergebnisse zeigen, werden mit den erfindungsgemäss verwendeten Pyrolysaten deutlich höhere TOC-Entfernungsraten erzielt, und sie weisen auch höhere Aufnahmekapazitäten auf.

**Tabelle 1**

| Adsorbens | ppm TOC im Zulauf | Aufnahmekapazität in g TOC/l Pyrolysat | Abbau H₂O₂ |
|---|---|---|---|
| (A)Amberlite XAD 16 | 5,2 | 0,03 | 5-10 % |
| (B)Carbon BD | 6,5 | 0,08 | 100 % |
| (C)Ambersorb 572 | 6,1 | 0,26 | 100 % |
| (D)Ambersorb 563 | 5,2 | 1,93 | 40 % |

## Patentansprüche

1. Verfahren zur Entfernung von hydrophilen organischen Verunreinigungen, die mit Wasser bei 15°C in Mengen von mindestens 10 Gew.-% mischbar sind, und/oder von Wasserstoffperoxid aus Spülwässern der Halbleiterfertigung mittels Adsorption, dadurch gekennzeichnet, dass man das Spülwasser durch ein Bett eines Pyrolysates eines makroretikulären sulfonierten vinylaromatischen Polymers mit einem Kohlenstoffgehalt von mindestens 85 Gew.-% und einem Kohlenstoff/Wasserstoff-Atomverhältnis von 1,5:1 bis 20:1 leitet.

2. Verfahren nach Anspruch 1, dadurch gekennzeichnet, dass man ein Pyrolysat verwendet, das Makroporen mit einem Porenradius von mehr als 25 nm und einem spezifischen Porenvolumen von mindestens 0,1 ml/g und Mesoporen mit einem Porenradius von 1 bis 25 nm und einem spezifischen Porenvolumen von mindestens 0,1 ml/g aufweist.

3. Verfahren nach Anspruch 1 oder 2, dadurch gekennzeichnet, dass man ein Pyrolysat verwendet, das Makroporen mit einem Porenradius von mehr als 25 nm und einem spezifischen Porenvolumen von mindestens 0,13 ml/g und Mesoporen mit einem Porenradius von 1 bis 25 nm und einem spezifischen Porenvolumen von mindestens 0,12 ml/g aufweist.

4. Verfahren nach einem der Ansprüche 1 bis 3, dadurch gekennzeichnet, dass man ein Pyrolysat verwendet, das Mikroporen mit einem Porenradius von weniger als 1 nm und einem spezifischen Porenvolumen von mindestens 0,1 ml/g aufweist.

5. Verfahren nach einem der Ansprüche 1 bis 4, dadurch gekennzeichnet, dass man ein Pyrolysat verwendet, das Mikroporen mit einem Porenradius von weniger als 1 nm und einem spezifischen Porenvolumen von mindestens 0,2 ml/g aufweist.

6. Verfahren nach einem der Ansprüche 1 bis 5, dadurch gekennzeichnet, dass man ein Pyrolysat mit einem Kohlenstoff/Wasserstoff-Atomverhältnis von 2:1 bis 10:1 verwendet.

7. Verfahren nach einem der Ansprüche 1 bis 6, dadurch gekennzeichnet, dass man ein Pyrolysat verwendet, das aus Luft bei Raumtemperatur und einer relativen Luftfeuchtigkeit von 94% weniger als 300 mg Wasser pro g Pyrolysat zu adsorbieren vermag.

8. Verfahren nach einem der Ansprüche 1 bis 7, dadurch gekennzeichnet, dass man zur Entfernung von hydrophilen organischen Verunreinigungen ein Pyrolysat verwendet, das aus Luft bei Raumtemperatur und einer relativen Luftfeuchtigkeit von 94% weniger als 200 mg Wasser pro g Pyrolysat zu adsorbieren vermag.

9. Verfahren nach einem der Ansprüche 1 bis 8, dadurch gekennzeichnet, dass man zur Entfernung von Wasserstoffperoxid ein Pyrolysat verwendet, das aus Luft bei Raumtemperatur und einer relativen Luftfeuchtigkeit von 94% mindestens 200 mg Wasser pro g Pyrolysat zu adsorbieren vermag.

10. Verfahren nach einem der Ansprüche 1 bis 9, dadurch gekennzeichnet, dass man ein Pyrolysat eines Styrol-Divinylbenzol-Copolymers verwendet.

11. Verfahren nach einem der Ansprüche 1 bis 10, dadurch gekennzeichnet, dass man ein Pyrolysat eines Styrol-Divinylbenzol-Copolymers mit einem Gewichtsverhältnis Styrol/Divinylbenzol von 75-90:10-25 verwendet.

12. Verfahren nach einem der Ansprüche 1 bis 11, dadurch gekennzeichnet, dass man ein Pyrolysat mit einer mittleren Korngrösse von 0,2 bis 1,5 mm verwendet.

13. Verfahren nach einem der Ansprüche 1 bis 12, dadurch gekennzeichnet, dass man zur Regeneration des Pyrolysates die Zufuhr von Spülwasser unterbricht und Wasserdampf mit einer Temperatur von 100 bis 250°C durch das Pyrolysat-Bett leitet.

## Claims

1. Process for removing hydrophilic organic contaminants which are miscible with water at 15°C in amounts of at least 10% by weight and/or of hydrogen peroxide from semiconductor fabrication reclaims by means of adsorption, characterized in that the reclaim is passed through a bed of a pyrolysate of a macroreticular sulphonated vinyl-aromatic polymer having a carbon content of at least 85% by weight and a carbon/hydrogen atomic ratio of from 1.5:1 to 20:1.

2. Process according to Claim 1, characterized in that a pyrolysate is used which has macropores having a pore radius of more than 25 nm and a specific pore volume of at least 0.1 ml/g and mesopores having a pore radius of from 1 to 25 nm and a specific pore volume of at least 0.1 ml/g.

3. Process according to Claim 1 or 2, characterized in that a pyrolysate is used which has macropores having a pore radius of more than 25 nm and a specific pore volume of at least 0.13 ml/g and mesopores having a pore radius of from 1 to 25 nm and a specific pore volume of at least 0.12 ml/g.

4. Process according to any one of Claims 1 to 3, characterized in that a pyrolysate is used which has micropores having a pore radius of less than 1 nm and a specific pore volume of at least 0.1 ml/g.

5. Process according to any one of Claims 1 to 4, characterized in that a pyrolysate is used which has micropores having a pore radius of less than 1 nm and a specific pore volume of at least 0.2 ml/g.

6. Process according to any one of Claims 1 to 5, characterized in that a pyrolysate having a carbon/hydrogen atomic ratio of from 2:1 to 10:1 is used.

7. Process according to any one of Claims 1 to 6, characterized in that a pyrolysate is used which is able to adsorb, from air at room temperature and a relative humidity of 94%, less than 300 mg of water per g of pyrolysate.

8. Process according to any one of Claims 1 to 7, characterized in that, to remove hydrophilic organic contaminants, a pyrolysate is used which is able to adsorb, from air at room temperature and a relative humidity of 94%, less than 200 mg of water per g of pyrolysate.

9. Process according to any one of Claims 1 to 8, characterized in that, to remove hydrogen peroxide, a pyrolysate is used which is able to adsorb, from air at room temperature and a relative humidity of 94%, at least 200 mg of water per g of pyrolysate.

10. Process according to any one of Claims 1 to 9, characterized in that a pyrolysate of a styrenedivinylbenzene copolymer is used.

11. Process according to any one of Claims 1 to 10, characterized in that a pyrolysate of a styrenedivinylbenzene copolymer is used having a weight ratio styrene/divinylbenzene of 75-90:10-25.

12. Process according to any one of Claims 1 to 11, characterized in that a pyrolysate having a mean particle size of from 0.2 to 1.5 mm is used.

13. Process according to any one of Claims 1 to 12, characterized in that, to regenerate the pyrolysate, the reclaim supply is interrupted and steam having a temperature of from 100 to 250°C is passed through the pyrolysate bed.

## Revendications

1. Procédé d'élimination, par adsorption, d'impuretés organiques hydrophiles susceptibles de se mélanger à de l'eau de 15°C à raison d'au moins 10 parties en poids et/ou de peroxyde d'hydrogène à partir d'eaux de rinçage de la fabrication de semi-conducteurs, caractérisé en ce qu'on fait passer l'eau de rinçage à travers un lit de produit de pyrolyse d'un polymère vinylaromatique sulfoné macroréticulé d'une teneur en carbone d'au moins 85% en poids et d'un rapport atomique carbone/hydrogène allant de 1,5:1 à 20:1.

2. Procédé selon la revendication 1, caractérisé en ce qu'on utilise un produit de pyrolyse qui présente des macropores d'un rayon de pores supérieur à 25 nm et d'un volume spécifique de pores d'au moins 0,1 ml/g et des mésopores d'un rayon de pores de 1 à 25 nm et d'un volume spécifique de pores d'au moins 0,1 ml/g.

3. Procédé selon la revendication 1 ou 2, caractérisé en ce qu'on utilise un produit de pyrolyse qui présente des macropores d'un rayon de pores supérieur à 25 nm et d'un volume spécifique de pores d'au moins 0,13 ml/g et des mésopores d'un rayon de pores de 1 à 25 nm et d'un volume spécifique de pores d'au moins 0,12 ml/g.

4. Procédé selon l'une quelconque des revendications 1 à 3, caractérisé en ce qu'on utilise un produit de pyrolyse qui présente des micropores d'un rayon de pores inférieur à 1 nm et d'un volume spécifique de pores d'au moins 0,1 ml/g.

5. Procédé selon l'une quelconque des revendications 1 à 4, caractérisé en ce qu'on utilise un produit de pyrolyse qui présente des micropores d'un rayon de pores inférieur à 1 nm et d'un volume spécifique de pores d'au moins 0,2 ml/g.

6. Procédé selon l'une quelconque des revendications 1 à 5, caractérisé en ce qu'on utilise un produit de pyrolyse dont le rapport atomique carbone/hydrogène est de 2:1 à 10:1.

7. Procédé selon l'une quelconque des revendications 1 à 6, caractérisé en ce qu'on utilise un produit de pyrolyse capable d'adsorber moins de 300 mg d'eau par g de produit de pyrolyse à partir d'air à la température ordinaire et d'une humidité relative de 94%.

8. Procédé selon l'une quelconque des revendications 1 à 7, caractérisé en ce qu'on utilise, pour éliminer les impuretés organiques hydrophiles, un produit de pyrolyse capable d'adsorber moins de 200 mg d'eau par g de produit de pyrolyse à partir d'air à la température ordinaire et d'une humidité relative de 94%.

9. Procédé selon l'une quelconque des revendications 1 à 8, caractérisé en ce qu'on utilise, pour éliminer le peroxyde d'hydrogène, un produit de pyrolyse capable d'adsorber au moins 200 mg d'eau par g de produit de pyrolyse à partir d'air à la température ordinaire et d'une humidité relative de 94%.

10. Procédé selon l'une quelconque des revendications 1 à 9, caractérisé en ce qu'on utilise un produit de pyrolyse d'un copolymère de styrène et de divinylbenzène.

11. Procédé selon l'une quelconque des revendications 1 à 10, caractérisé en ce qu'on utilise un produit de pyrolyse d'un copolymère de styrène et de divinylbenzène d'un rapport pondéral de styrène/divinylbenzène de 75-90:10-25.

12. Procédé selon l'une quelconque des revendications 1 à 11, caractérisé en ce qu'on utilise un produit de pyrolyse d'une dimension particulaire moyenne de 0,2 à 1,5 mm.

13. Procédé selon l'une quelconque des revendications 1 à 12, caractérisé en ce que, pour régénérer le produit de pyrolyse, on interrompt l'alimentation en eaux de rinçage et on introduit dans le lit de produit de pyrolyse de la vapeur d'eau à une température de 100 à 250°C.
